# EUROPÄISCHE PATENTSCHRIFT

(11) **EP 1 131 574 B1**
(45) Veröffentlichungstag und Bekanntmachung des Hinweises auf die Patenterteilung: **03.09.2003**
(21) Anmeldenummer: 99953963.8
(22) Anmeldetag: 04.11.1999
(51) Int. Cl.: F16K 1/30, F17C 13/02, F17C 5/06

(54) **ABSPERRVORRICHTUNG FÜR DIE BEFÜLLEINRICHTUNG EINES DRUCKBEHÄLTERS**
SHUT-OFF DEVICE FOR THE FILLING DEVICE OF A PRESSURE TANK
DISPOSITIF D'ARRET POUR SYSTEME DE REMPLISSAGE D'UN RECIPIENT A PRESSION

(30) Priorität: 20.11.1998 DE 19853530
(43) Veröffentlichungstag der Anmeldung: 12.09.2001
(73) Patentinhaber: Messer Griesheim GmbH, 65933 Frankfurt am Main (DE)
(72) Erfinder: TOCHA, Klaus, D-40764 Langenfeld (DE); HENNEBORN, Roland, D-50259 Pulheim (DE)
(74) Vertreter: Berdux, Klaus, Dipl.-Ing.
(86) Internationale Anmeldenummer: EP9908418
(87) Internationale Veröffentlichungsnummer: WO00031445

(56) Entgegenhaltungen:
- EP-A- 0 846 901
- DE-A- 2 156 068
- DE-A- 3 314 905
- DE-C- 4 310 285
- DE-U- 1 807 308

## Beschreibung

Die Erfindung betrifft eine Absperrvorrichtung für die Befülleinrichtung eines Druckbehälters, insbesondere zur Speicherung tiefkalt verflüssigter Gase, mit einem Absperrventil mit einem Ventilgehäuse und einem durch eine Schließfeder belasteten Ventilkörper, das zum Befüllen des Druckbehälters entgegen der Kraft der Schließfeder in Offen-Stellung bringbar ist, mit einer Vorrichtung zur Arretierung des Ventilkörpers in Offen-Stellung des Ventils und einer vom Behälterdruck beaufschlagten Auslösevorrichtung, welche bei Überschreiten eines vorgegebenen Behältergrenzdruckes die Vorrichtung zur Freigabe der Arretierung veranlaßt.

Ein wesentlicher Aspekt bei der Konstruktion von Absperrvorrichtungen für die Befülleinrichtung eines Druckbehälters ist die sichere Vermeidung von Drucküberschreitungen beim Befüllen der Druckbehälter.

Die Absperrvorrichtungen sollen einerseits eine größtmögliche Sicherheit bieten, andererseits möglichst effektiv ein Manipulieren und Ausschalten der Absperrvorrichtungen ausschließen. Insbesondere soll eine von äußeren Einflüssen möglichst entkoppelte Eigensteuerung der Absperrvorrichtung gewährleistet sein.

Aus der DE-OS 21 56 068 ist eine eigenmediumgesteuerte Absperrvorrichtung zur Vermeidung von Drucküberschreitungen in einer Gas- oder Flüssigkeitsleitung mit einem Absperrventil bekannt, wobei der Ventilkörper mit einem elastischen Mittel in Form einer Schließfeder zur Erzeugung einer Kraft in Geschlossen-Stellung ausgestattet ist, wobei eine Vorrichtung zur Arretierung in Form eines Arretierhebels und eines zugeordneten Vorsprunges auf der Ventilspindel vorhanden ist, wobei diese Vorrichtung zur Arretierung eine Arretierung des Absperrventils in Offen-Stellung entgegen der Kraft in Richtung Geschlossen-Stellung ermöglicht und wobei diese Vorrichtung zur Arretierung Auslösevorrichtungen zur Freigabe der Vorrichtung zur Arretierung bei Über- oder Unterschreiten eines vorgegebenen Maximal- oder Minimaldruckes umfaßt.

Aus der DE 196 50 560 A1 ist ebenfalls eine Absperrvorrichtung für die Befülleinrichtung eines Druckbehälters bekannt, bei der die Auslösevorrichtung einen vom Behälterdruck beaufschlagten Balg mit einer daran angebrachten Schaltstange aufweist, welche die als Sperrhebel ausgebildete Vorrichtung zur Arretierung des Ventilkörpers bei Über- und Unterschreiten von Behältergrenzdrücken aus der Arretierposition in die Freigabeposition verschwenkt.

Bei den bekannten Absperrvorrichtungen für die Befülleinrichtung eines Druckbehälters ist je nach Aufstellungsumfeld und vorliegenden Sicherheitsvorschriften problematisch, daß beim Auslösen und auch nach dem Auslösen das tiefkalte Gas abgeblasen wird. Unter Umständen muß der Austrittsort durch aufwendige Ableitung des Gases in Zonen mit niedrigem Gefährdungspotential verlagert werden. Außerdem ist es vorteilhaft, wenn die Steuerleitung zwischen dem Druckbehälter und der Auslösevorrichtung auch einen kleinen Querschnitt - wie bei Signalleitungen üblich - aufweist.
Ausgehend von diesem Stand der Technik liegt der Erfindung somit die Aufgabe zugrunde, eine Auslösevorrichtung für eine Absperrvorrichtung zur Verfügung zu stellen, die ein Auslösen der Absperrvorrichtung ohne oder nur mit geringem Abblasen der geförderten tiefkalten Gase ermöglicht.

Die zuvor hergeleitete und aufgezeigte Aufgabe ist erfindungsgemäß dadurch gelöst, daß die Auslösevorrichtung einen Zylinder, einen Kolben und eine Kolbenstange aufweist, daß zwischen Kolben und Zylinder ein mediumsdurchlässiger Ringspalt vorgesehen ist, daß die Kolbenstange auf die Vorrichtung zur Freigabe der Arretierung wirkt, daß der Zylinder auf einer Seite des Kolbens ein bei Erreichen des Behältergrenzdruckes öffnendes Überströmventil aufweist und daß bei geöffnetem Überströmventil der Zylinder auf einer Seite des Kolbens mit dem Druckbehälter strömungsverbunden ist und auf der anderen Seite des Kolbens mit einem Referenzdruckvolumen, vorzugsweise der umgebenden Atmosphäre, strömungsverbunden ist.

Mit der weitergebildeten Auslösevorrichtung der erfindungsgemäßen Absperrvorrichtung ist eine Freigabe der Vorrichtung zur Arretierung als präzise reproduzierbare Sprungfunktion dadurch gewährleistet, daß die Schaltkräfte über eine pneumatische Verstärkung zu Beginn des Öffnungsvorganges, der präzise vorgebbar ist, des Überströmventils sprunghaft verstärkt werden. Diese sprunghafte Verstärkung wird bei der erfindungsgemäßen Absperrvorrichtung auf einfachem pneumatischen Wege und nicht per Präzisionsmechanik mit den Nachteilen aufwendiger Fertigung und Justage gewährleistet. Sobald sich das Überströmventil öffnet, entsteht über den Ringspalt zwischen Kolben und Zylinder ein Differenzdruck, der durch die Wirkung auf die Kolbenfläche eine pneumatische Kraftverstärkung zur Auslösung der Absperrvorrichtung gewährleistet. Dadurch, daß, gemäß einer ersten bevorzugten Ausgestaltung der erfindungsgemäßen Absperrvorrichtung, in den Zylinder auf einer Seite des Kolbens eine unversperrte Steuerleitung zur Herstellung der Strömungsverbindung mit dem Druckbehälter mündet und daß der Zylinder auf der anderen Seite des Kolbens mit dem Überströmventil verbunden ist, herrscht in dem gesamten Zylinder bei geschlossenem Überströmventil der Behälterdruck. Überschreitet der Behälterdruck den Behältergrenzdruck, so öffnet sich das Überströmventil, wodurch auf der der Steuerleitung gegenüberliegenden Seite des Kolbens aufgrund des relativ engen Ringspaltes gegenüber der anderen Seite des Kolbens ein geringerer Druck entsteht, was wiederum dazu führt, daß der Kolben einer hohen Kraft in Richtung auf die der unversperrten Steuerleitung abgewandten Seite des Kolbens zum Auslösen der Absperrvorrichtung unterworfen ist

Alternativ zu der soeben beschriebenen Ausgestaltung der erfindungsgemäßen Absperrvorrichtung mündet in den Zylinder auf der einen Seite des Kolbens über das Überströmventil eine Steuerleitung zur Herstellung der Strömungsverbindung mit dem Druckbehälter und ist der Zylinder auf der anderen Seite des Kolbens unversperrt mit dem Referenzdruckvolumen strömungsverbunden. Bei dieser Alternative steht der Zylinder bei geschlossenem Überströmventil unter dem Druck des Referenzdruckvolumens. Sobald sich das Überströmventil bei dieser Alternative öffnet, steigt der Druck auf der der Steuerleitung zugewandten Seite des Kolbens aufgrund des engen Ringspaltes schnell an, so daß die Druckdifferenz zwischen beiden Seiten des Kolbens die Öffnung des Überströmventils pneumatisch verstärkt.

Im Ergebnis sorgt die erfindungsgemäße Ausgestaltung bei beiden Alternativen dafür, daß die Kolbenstange der Auslösevorrichtung in dem Augenblick, in dem sich das Überströmventil zu öffnen beginnt, sprunghaft beschleunigt wird und somit in einer Sprungfunktion auf die Vorrichtung zur Freigabe der Arretierung wirkt

Zur Herstellung eines definierten Ausgangszustandes und zur eventuell selbsttätigen Rückstellung der Auslösevorrichtung ist es vorteilhaft, daß die Kolbenstange gemäß einer weiteren Ausgestaltung der Erfindung über eine Feder in Richtung der der Steuerleitung zugewandten Seite des Kolbens kraftbeaufschlagt ist

Die beschriebene zweite alternative Ausgestaltung der Auslösevorrichtung wird vorteilhaft dadurch weitergebildet, daß das der Steuerleitung zugewandte Ende der Kolbenstange das Dichtelement des Überströmventils trägt. Hierdurch ist gewährleistet, daß die kraftbeaufschlagte Kolbenstange der Auslösevorrichtung zusammen mit dem Dichtelement und dem an einem Ende des Zylinders angeordneten Ventilsitz das Überströmventil bildet. Hierdurch verringert sich die Anzahl der Bauteile gegenüber einer Ausführungsform mit separatem Überströmventil.

Wird für die zweite alternative Ausgestaltung gewünscht, daß sich die Auslösevorrichtung bei Abfall des Behälterdruckes unter den Behältergrenzdruck nicht selbsttätig zurückstellt, so ist dies dadurch zu gewährleisten, daß der Zylinder und der Kolben auf der der Steuerleitung abgewandten Seite in der Endlage der Kolbenbewegung weg von der Steuerleitung die Strömungsverbindung zum Referenzdruckvolumen unterbrechen. Durch die Unterbrechung der Strömungsverbindung zum Referenzdruckvolumen wird der Druck im Zylinder statisch auf dem Behälterdruck gehalten, da das Gas nicht über die Strömungsverbindung hin zum Referenzdruckvolumen ausströmen kann. Diese statische Druckdifferenz sorgt dann dafür, daß sich der Kolben nicht selbsttätig zurückstellen kann.
Zur gesteuerten Zurückstellung ist die erfindungsgemäße Absperrvorrichtung dadurch weiter ausgestaltet, daß der Zylinder auf der der Steuerleitung zugewandten Seite über ein Ventil mit dem Referenzdruckvolumen strömungsverbindbar ist. Über ein derartiges, beispielsweise handbetätigbares, Ventil ist es möglich, den Druck auf der der Steuerleitung zugewandten Seite des Kolbens soweit abzubauen, daß eine Rückstellung des Kolbens und damit der Auslösevorrichtung möglich wird.

Beide beschriebenen alternativen Ausgestaltungen der Auslösevorrichtung sind dahingehend vorteilhaft, daß die Steuerleitung keine großen Querschnitte erfordert und daß kein oder nur ein geringes Abblasen der Gase oder Medien an der Auslösevorrichtung erfolgt. Insbesondere bei der Ausgestaltung der zweiten Alternative, bei der die Strömungsverbindungen zum Referenzdruckvolumen durch Zusammenwirken von Zylinder und Kolben unterbrochen werden, tritt nur eine geringe Menge des Gases oder Mediums in das Referenzdruckvolumen, also insbesondere in die Umgebung, aus.

Es gibt nun eine Vielzahl von Möglichkeiten, die erfindungsgemäße Absperrvorrichtung für die Befülleinrichtung eines Druckbehälters auszugestalten und weiterzubilden. Hierzu wird beispielhaft verwiesen einerseits auf die dem Patentanspruch 1 nachgeordneten Patentansprüche, andererseits auf die Beschreibung von Ausführungsbeispielen der erfindungsgemäßen Absperrvorrichtung für die Befülleinrichtung eines Druckbehälters in Verbindung mit der Zeichnung. In der Zeichnung zeigen
- Fig. 1: vereinfacht im Schnitt die wesentlichen Bauteile
eines ersten Ausführungsbeispiels einer
erfindungsgemäßen Absperrvorrichtung und
- Fig. 2: vereinfacht im Schnitt die wesentlichen Bauteile
eines zweiten Ausführungsbeispiels einer
erfindungsgemäßen Absperrvorrichtung.

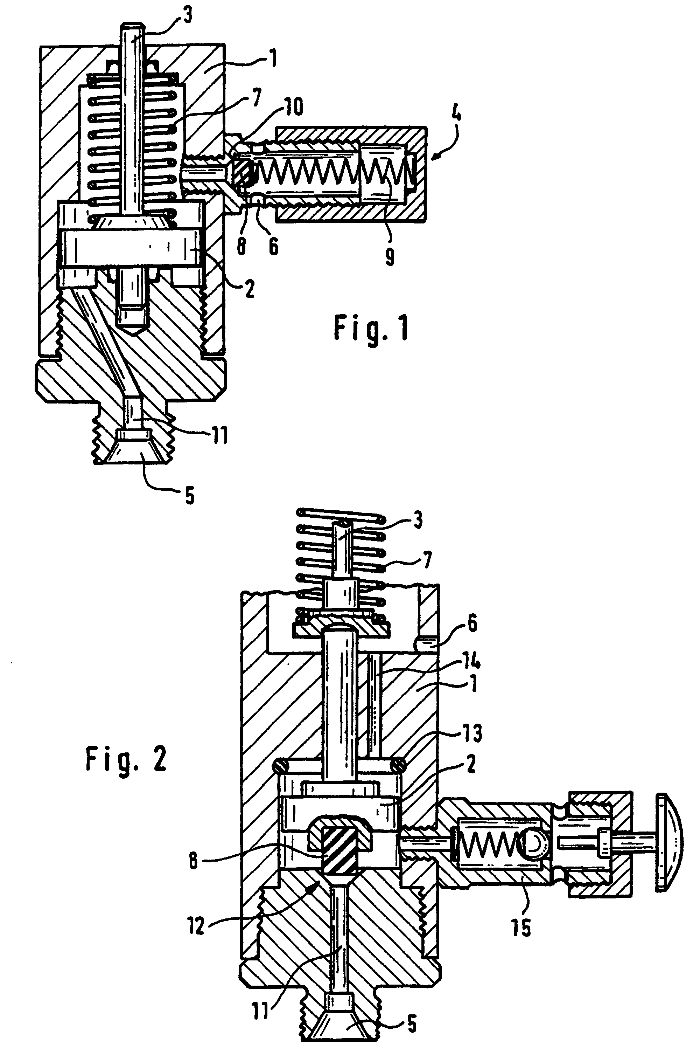

Bei der Darstellung in den Fig. 1 und 2 wird auf die vollständige Darstellung der erfindungsgemäßen Absperrvorrichtung für die Befülleinrichtung eines Druckbehälters verzichtet und es werden nur die erfindungswesentlichen Bauteile einer vom Behälterdruck beaufschlagten Auslösevorrichtung, welche beim Überschreiten eines vorgegebenen Behältergrenzdruckes die Vorrichtung zur Freigabe der Arretierung veranlaßt, dargestellt

Die in Fig. 1 dargestellte erfindungswesentliche Ausgestaltung der Auslösevorrichtung des ersten Ausführungsbeipiels weist einen Zylinder 1, einen Kolben 2 und eine Kolbenstange 3 auf, wobei zwischen Kolben 2 und Zylinder 1 ein mediumsdurchlässiger Ringspalt vorgesehen ist. Die Kolbenstange 3 wirkt auf die nicht dargestellte Vorrichtung zur Freigabe der Arretierung. Der Zylinder 1 weist auf einer Seite des Kolbens 2 ein bei Erreichen des Behältergrenzdruckes öffnendes Überströmventil 4 auf. Bei geöffnetem Überströmventil 4 ist der Zylinder 1 auf einer Seite des Kolbens 2 mit dem nicht dargestellten Druckbehälter über einen Anschluß 5 strömungsverbunden und auf der anderen Seite des Kolbens 2 mit einem Referenzdruckvolumen, hier der umgebenden Atmosphäre, über einen Auslaß 6 strömungsverbunden. Zur Rückstellung des Kolbens 2 ist zwischen dem Zylinder 1 und dem Kolben 2 eine Feder 7 vorgesehen. Zur Einstellung des Behältergrenzdruckes wird das Dichtungsstück 8 des Überströmventils 4 durch eine Feder 9 mit einer Kraft in Richtung des Ventilsitzes 10 beaufschlagt

In dem Zylinder 1 befindet sich der Kolben 2 mit beidseitiger (durchgehender) Kolbenstange 3. Der Kolben 2 ist nicht gegen den Zylinder 1 abgedichtet, berührt also auch die Zylinderinnenwand nicht, so daß sich zwischen Kolben 2 und Zylinderinnenwand ein Ringschlitz befindet. Das Zylinderinnere ist mit dem Druckraum, beispielsweise eines Kaltvergasers, verbunden. Beide Kolbenstangenenden und alle Einbauteile sind gasdicht nach außen abgedichtet. Durch die Feder 7 wird der Kolben 2 nach unten an einen Anschlag gedrückt. Der im Zylinder 1 herrschende Druck beaufschlagt beide Seiten des scheibenförmigen Kolbens 2 gleichermaßen. Auch die Kolbenstange 3 übt keine druckabhängigen Kräfte aus. Auf der einer unversperrten Steuerleitung 11 zur Herstellung der Strömungsverbindung mit dem nicht dargestellten Druckbehälter abgewandten Seite des Kolbens 2 ist das Zylinderinnere mit einem federbelasteten Überströmventil 4 verbunden. Dieses Überströmventil 4 öffnet mit Erreichen des erwünschten, eingestellten Behältergrenzdruckes der erfindungsgemäßen Absperrvorrichtung. Mit dem Öffnen des Überströmventils 4 wird ein in der Regel gasförmiges Medium aus dem entsprechenden Zylinderteil abgeführt Es entsteht über dem Ringspalt zwischen dem Zylinder 1 und dem Kolben 2 ein Differenzdruck und damit eine Druckkraft, die zu einem spontanen Hub des Kolbens 2 führt. Die Kolbenstange 3 betätigt dann in an sich bekannter Art und Weise (vgl. z.B. DE 196 50 560 A1) eine Vorrichtung zur Arretierung des Ventilkörpers, so daß ein Absperrventil geschlossen wird.

Sobald der Druck im Zylinder 1 soweit absinkt, daß sich das Überströmventil 4 wieder schließt, liegt im gesamten Zylinder 1 nach kurzer Zeit ein ausgeglichener Druck vor. Die Feder 7 schiebt dann den Kolben 2 zurück in die Ausgangsposition, so daß die Auslösevorrichtung wieder die Arretierung des nicht dargestellten Absperrventils in Offen-Stellung ermöglicht.
Durch Miniaturisierung des Überströmventils 4 wird die Ausblasgasmenge je Auslösevorgang trotz hoher Auslösekräfte sehr klein gehalten.

Bei dem in Fig. 2 dargestellten Ausführungsbeispiel sind die funktional übereinstimmenden Bauteile mit übereinstimmenden Bezugszeichen versehen worden.

Bei dem in Fig. 2 dargestellten Ausführungsbeispiel ist der Druckraum eines nicht dargestellten Kaltvergasers über die Steuerleitung 11 mit einem federbelasteten Überströmventils 12 verbunden. Ein Dichtungselement 8 am Kolben 2 verschließt die Steuerleitung 11 gasdicht. Oberhalb des Überströmventils 11 herrscht daher Atmosphärendruck. Das Überströmventil 12 ist über die Feder 7 so eingestellt, daß beginnendes Öffnen (Hub) dem erwünschten Schaltdruck entspricht.

Mit diesem Öffnungsvorgang strömt Gas an dem Dichtungselement 8 vorbei und erzeugt auf der großen Fläche des unabgedichteten Kolbens 2 eine Druckkraft, die zur spontanen Hubbewegung des Kolbens 2 und damit der Kolbenstange 3 führt. Hierdurch wird die nicht dargestellte Vorrichtung zur Arretierung des Ventilkörpers in Offen-Stellung des Absperrventils betätigt. In der in Fig. 2 oberen Kolbenendlage liegt der Kolben 2 auf einem Dichtungsring 13, so daß ein dauerhaftes Ausströmen des Gases über die Stichbohrung 14 und den Auslaß 6 verhindert wird.

Liegt der Kolben in Kolbenendlage am Dichtungsring 13 an, wirkt der Behälterdruck ohne Strömung, d.h. statisch, auf den Kolben 2. Gasverluste treten nicht auf. In dieser Stellung verbleibt die Auslösevorrichtung unter der Voraussetzung, daß der Behälterdruck nicht erheblich absinkt. Das heißt, die Auslösevorrichtung setzt sich nicht selbsttätig zurück. Wird nun manuell ein seitlich angebrachtes Tasterventil 15 betätigt, so wird der Zylinder 1 auf der Seite des Kolbens 2, die der Steuerleitung 11 zugewandt ist, druckentlastet. Hierdurch wird die Druckkraft auf den Kolben 2 soweit reduziert, daß sich der Kolben 2 federbelastet in die verschlossene Stellung des Überströmventils 12 bewegt.
Damit wird automatisch der Ausströmvorgang aus dem manuell betätigten Tasterventil 15 beendet.

Bei dem in Fig. 2 dargestellten Ausführungsbeispiel genügt zur Auslösung fast ausschließlich der statische Druck, was gleichbedeutend damit ist, daß nach der Auslösung keine unerwünschte Ausströmung des gespeicherten Mediums erfolgt.

## Patentansprüche

1. Absperrvorrichtung für die Befülleinrichtung eines Druckbehälters, insbesondere zur Speicherung tiefkalt verflüssigter Gase, mit einem Absperrventil mit einem Ventilgehäuse und einem durch eine Schließfeder belasteten Ventilkörper, das zum Befüllen des Druckbehälters entgegen der Kraft der Schließfeder in Offen-Stellung bringbar ist, mit einer Vorrichtung zur Arretierung des Ventilkörpers in Offen-Stellung des Ventils und mit einer vom Behälterdruck beaufschlagten Auslösevorrichtung, welche bei Überschreiten eines vorgegebenen Behältergrenzdruckes die Vorrichtung zur Freigabe der Arretierung veranlaßt,
**dadurch gekennzeichnet,**
**daß** die Auslösevorrichtung einen Zylinder (1), einen Kolben (2) und eine Kolbenstange (3) aufweist, daß zwischen Kolben (2) und Zylinder (1) ein mediumsdurchlässiger Ringspalt vorgesehen ist, daß die Kolbenstange (3) auf die Vorrichtung zur Freigabe der Arretierung wirkt, daß der Zylinder (1) auf einer Seite des Kolbens (2) ein bei Erreichen des Behältergrenzdruckes öffnendes Überströmventit (4, 12) ausweist, daß bei geöffnetem Überströmventil (4, 12) der Zylinder (1) auf einer Seite des Kolbens (2) mit dem Druckbehälter strömungsverbunden ist und auf der anderen Seite des Kolbens mit einem Referenzdruckvolumen, vorzugsweise der umgebenden Atmosphäre, strömungsverbunden ist.

2. Absperrvorrichtung nach Anspruch 1,
**dadurch gekennzeichnet,**
**daß** in dem Zylinder (1) auf einer Seite des Kolbens (2) eine unversperrte Steuerleitung (11) zur Herstellung der Strömungsverbindung mit dem Druckbehälter mündet und daß der Zylinder (1) auf der anderen Seite des Kolbens (2) mit dem Überströmventil (4) verbunden ist.

3. Absperrvorrichtung nach Anspruch 1,
**dadurch gekennzeichnet,**
**daß** in dem Zylinder (1) auf der einen Seite des Kolbens (2) über das Überströmventil (12) eine Steuerleitung (11) zur Herstellung der Strömungsverbindung mit dem Druckbehälter mündet, und daß der Zylinder (1) auf der anderen Seite des Kolbens (2) unversperrt mit dem Referenzdruckvolumen strömungsverbunden ist.

4. Absperrvorrichtung nach einem der Ansprüche 2 bis 3,
**dadurch gekennzeichnet,**
**daß** die Kolbenstange (3) über eine Feder (7) in Richtung der der Steuerleitung (11) zugewandten Seite des Kolbens (2) kraftbeaufschlagt ist

5. Absperrvorrichtung nach Anspruch 3 oder 4,
**dadurch gekennzeichnet,**
**daß** das der Steuerleitung (11) zugewandte Ende der Kolbenstange (3) das Dichtungselement (8) des Überströmventils (12) trägt.

6. Absperrvorrichtung nach einem der Ansprüche 3 bis 5,
**dadurch gekennzeichnet,**
**daß** der Zylinder (1) und der Kolben (2) auf der der Steuerleitung (11) abgewandten Seite in der Endlage der Kolbenbewegung weg von der Steuerleitung (11) die Strömungsverbindung zum Referenzdruckvolumen unterbrechen.

7. Absperrvorrichtung nach einem der Ansprüche 3 bis 6,
**dadurch gekennzeichnet,**
**daß** der Zylinder (1) auf der der Steuerleitung (11) zugewandten Seite über ein Ventil (15) mit dem Referenzdruckvolumen strömungsverbindbar ist.

## Claims

1. Shut-off apparatus for the filling device of a pressure container, in particular for the storage of low-temperature liquefied gases, comprising a shut-off valve with a valve housing and a valve body which is loaded by a closing spring and can be moved into the open position counter to the force of the closing spring in order to fill the pressure container, comprising a device for locking the valve body in the open position of the valve and comprising a triggering device which is acted on by the container pressure and which, when a predefined limiting container pressure is exceeded, causes the device to release the locking, **characterized in that** the triggering device has a cylinder (1), a piston (2) and a piston rod (3), **in that** an annular gap through which medium passes is provided between piston (2) and cylinder (1), **in that** the piston rod (3) acts on the device for releasing the locking, **in that** the cylinder (1) on one side of the piston (2) has a relief valve (4, 12) which opens when the limiting container pressure is reached, **in that** when the relief valve (4, 12) is opened, the cylinder (1) on one side of the piston (2) has a flow connection to the pressure container and, on the other side of the piston, has a flow connection to a reference pressure volume, preferably the surrounding atmosphere.

2. Shut-off apparatus according to Claim 1, **characterized in that** a control line (11) that is not shut off opens into the cylinder (1) on one side of the piston (2) in order to produce the flow connection to the pressure container, and **in that** the cylinder (1) on the other side of the piston (2) is connected to the relief valve (4).

3. Shut-off apparatus according to Claim 1, **characterized in that** a control line (11) opens into the cylinder (1) on one side of the piston (2) via the relief valve (12) in order to produce the flow connection to the pressure container, and **in that** the cylinder (1) on the other side of the piston (2) has a flow connection that is not shut off to the reference pressure volume.

4. Shut-off apparatus according to one of Claims 2 to 3, **characterized in that** the piston rod (3) is acted on by a spring (7) with a force in the direction of the side of the piston (2) that faces the control line (11).

5. Shut-off apparatus according to Claim 3 or 4, **characterized in that** the end of the piston rod (3) that faces the control line (11) bears the sealing element (8) of the relief valve (12).

6. Shut-off apparatus according to one of Claims 3 to 5, **characterized in that** on the side facing away from the control line (11), in the end position of the piston movement away from the control line (11), the cylinder (1) and piston (2) interrupt the flow connection to the reference pressure volume.

7. Shut-off apparatus according to one of Claims 3 to 6, **characterized in that** on the side facing the control line (11), the cylinder (1) can have a flow connection made to the reference pressure volume via a valve (15).

## Revendications

1. Dispositif d'arrêt pour l'installation de remplissage d'un réservoir sous pression, notamment pour stocker des gaz liquéfiés à basse température, comprenant une vanne d'arrêt ayant un corps de vanne et un organe de vanne chargé par un ressort de fermeture que l'on met en position d'ouverture contre la force du ressort de fermeture pour remplir le réservoir sous pression,
un dispositif pour bloquer l'organe de vanne en position d'ouverture de la vanne et un dispositif de déclenchement sollicité par la pression du réservoir et qui en cas de dépassement d'une pression limite prédéterminée du réservoir, commande le dispositif pour libérer le blocage,
**caractérisé en ce que**
le dispositif de déclenchement comprend un cylindre (1), un piston (2) et une tige de piston (3),
un intervalle annulaire entre le piston (2) et le cylindre (1) laisse passer le fluide,
la tige de piston (3) agit sur le dispositif pour libérer le blocage,
le cylindre (1) comporte d'un côté du piston (2) une vanne de débordement (4, 12) s'ouvrant lorsqu'on atteint la pression limite du réservoir,
lorsque la vanne de débordement (12) est ouverte, le cylindre (1) est relié d'un côté du piston (12) au réservoir sous pression par une liaison de fluide, et de l'autre côté du piston à un volume de pression de référence notamment la pression atmosphérique (liaison de fluide).

2. Dispositif d'arrêt selon la revendication 1,
**caractérisé en ce que**
du côté du piston (2) le cylindre (1) comporte une conduite de commande (11) non fermée pour réaliser la liaison de fluide avec le réservoir de pression et le cylindre (1) est relié de l'autre côté du piston (2) à la soupape de débordement (4).

3. Dispositif d'arrêt selon la revendication 1,
**caractérisé en ce qu'**
une conduite de commande (11) pour réaliser la liaison de fluide avec le réservoir sous pression débouche dans le cylindre (1) d'un côté du piston (2) par l'intermédiaire de la soupape de débordement (12) et de l'autre côté du piston (2) le cylindre communique par une liaison de fluide non fermée avec le volume à la pression de référence.

4. Dispositif d'arrêt selon l'une des revendications 2 et 3,
**caractérisé en ce que**
la tige de piston (3) est sollicitée par un ressort (7) en direction du côté du piston (2) tourné vers la conduite de commande (11).

5. Dispositif d'arrêt selon la revendication 3 ou 4,
**caractérisé en ce que**
l'extrémité de la tige de piston (3) tournée vers la conduite de commande (11) porte l'élément d'étanchéité (8) de la soupape de débordement (12).

6. Dispositif d'arrêt selon l'une des revendications 3 à 5,
**caractérisé en ce que**
le cylindre (1) et le piston (2) coupent la liaison de fluide vers le volume à la pression de référence du côté opposé à la conduite de commande (11) pour la position de fin de course du mouvement du piston éloigné de la conduite de commande (11).

7. Dispositif d'arrêt selon l'une des revendications 3 à 6,
**caractérisé en ce que**
le cylindre (1) peut être relié par une liaison de fluide au volume à la pression de référence sur le côté tourné vers la conduite de commande (11) par l'intermédiaire d'une vanne (15).
